# EUROPÄISCHE PATENTANMELDUNG

(11) **EP 3 772 644 A1**
(43) Veröffentlichungstag der Anmeldung: **10.02.2021**
(21) Anmeldenummer: 19190255.0
(22) Anmeldetag: 06.08.2019
(51) Int. Cl.: G01N 21/3504, G01N 21/37

(54) **NICHTDISPERSIVER INFRAROT-GASANALYSATOR ZUR BESTIMMUNG VON MINDESTENS ZWEI GASKOMPONENTEN IN EINEM MESSGAS**

(71) Anmelder: Siemens Aktiengesellschaft, 80333 München (DE)
(72) Erfinder: Hörner, Thomas, 76133 Karlsruhe (DE)

(57) **Zusammenfassung**

Ein nichtdispersiver Infrarot-Gasanalysator (1) zur Bestimmung einer in vergleichsweise hoher Konzentration vorliegenden Gaskomponente wie Kohlendioxid und mindestens einer weiteren Gaskomponente in einem Messgas (7) weist eine Infrarot-Strahlungsquelle (2), eine Modulationseinrichtung (8), eine das Messgas (7) aufnehmende Messkammer (5), eine Vergleichskammer (6) und mindestens zwei hintereinander liegende optopneumatische Detektoren (10, 11) auf, von denen jeder jeweils eine der unterschiedlichen Gaskomponenten enthält.

Zwischen der Infrarot-Strahlungsquelle (2) und den Detektoren (10, 11) ist ein Gasfilter (12) angeordnet, das die in der hohen Konzentration im Messgas (7) vorliegende Gaskomponente, z. B. Kohlendioxid in natürlicher Isotopenzusammensetzung, enthält und eine optische Dicke aufweist, durch die im Bereich einer Absorptionsbande der betreffenden Gaskomponente Sättigungsabsorption erreicht wird und gleichzeitig in mindestens einer anderen Absorptionsbande keine Sättigungsabsorption vorhanden ist.

## Beschreibung

Die Erfindung betrifft einen nichtdispersiven Infrarot-Gasanalysator zur Bestimmung von mindestens zwei Gaskomponenten in einem Messgas, wobei eine der Gaskomponenten im Vergleich zu den übrigen Gaskomponenten in hoher bzw. höherer Konzentration vorliegt, mit einer Infrarot-Strahlungsquelle, einer Modulationseinrichtung, einer das Messgas aufnehmenden Messkammer, einer Vergleichskammer und mindestens zwei hintereinander liegenden optopneumatischen Detektoren, von denen jeder jeweils eine der unterschiedlichen Gaskomponenten enthält.

Ein derartiger NDIR-Gasanalysator ist gleichermaßen aus der DE 197 52 508 A1 und der DE 10 2004 031 643 A1 bekannt.

Um in einem Messgas vergleichsweise große Konzentrationen von Kohlendioxid (CO₂) und kleine Konzentrationen einer weiteren Gaskomponente, wie Kohlenmonoxid (CO) zu messen, waren zuvor eine kurze Messkammer (Küvette) für die große Konzentration und eine lange Messkammer für die kleine Konzentration erforderlich. Dies konnte durch Verwendung von zwei NDIR-Gasanalysatoren oder mit einem NDIR-Gasanalysator erreicht werden, in dem die unterschiedlich langen Messkammern mit dem jeweils nachfolgenden Detektor für die betreffende Gaskomponente entweder in verschiedenen Strahlengängen nebeneinander oder in einem Strahlengang hintereinander angeordnet waren.

Bei dem eingangs erwähnten und aus der DE 197 52 508 A1 oder der DE 10 2004 031 643 A1 bekannten NDIR-Gasanalysator ist der Kohlendioxid enthaltende Detektor mit dem 13CO₂-Isotop gefüllt, das in dem natürlichen CO₂ mit einen Anteil von etwa 1,1 % vorliegt, wobei für die meisten technischen Prozesse (Verbrennung) das Isotopenverhältnis als ausreichend konstant angenommen werden kann. Daher kann bei der Messung von CO₂ über die 13CO₂-Konzentration eine 100-fach längere Messkammer als bei Messung mit einem mit natürlichem CO₂ gefüllten Detektor verwendet werden.

Von Nachteil sind jedoch die vergleichsweise hohen Kosten für die 13CO₂-Füllung des Detektors für das Kohlendioxid.

Der Erfindung liegt daher die Aufgabe zugrunde, eine alternative Lösung zu finden, um eine in vergleichsweise hoher Konzentration vorliegende Gaskomponente wie Kohlendioxid, zusammen mit mindestens einer weiteren Gaskomponente in einem NDIR-Gasanalysator mit nur einer Messkammer zu messen.

Gemäß der Erfindung wird die Aufgabe dadurch gelöst, das bei dem nichtdispersiven Infrarot-Gasanalysator der eingangs genannten Art zwischen der Infrarot-Strahlungsquelle und den Detektoren ein Gasfilter angeordnet ist, das die in der hohen Konzentration im Messgas vorliegende Gaskomponente enthält und eine optische Dicke aufweist, durch die im Bereich einer Absorptionsbande der betreffenden Gaskomponente Sättigungsabsorption erreicht wird und gleichzeitig in mindestens einer anderen Absorptionsbande keine Sättigungsabsorption vorhanden ist.

Die optische Dicke ist ein Maß für die Abschwächung der Infrarot-Strahlung beim Passieren von Gasschichten. Sie ist das Produkt aus dem spektralen Extinktionskoeffizienten des Gases und der Weglänge der durchstrahlten Gasschichten.

Sättigungsabsorption bedeutet, dass eine weitere Erhöhung der optischen Dicke der Gasschicht des Gasfilters zu keiner weiteren Erhöhung der Absorptionsintensität innerhalb der Nachweisgrenzen der Messmethode führt. Dasselbe gilt folglich auch für jede weitere Gasschicht, hier die Gasschichten in der Messkammer und den Detektoren, die in dem Strahlengang hinter dem Gasfilter liegen.

So absorbiert beispielsweise Kohlendioxid Infrarot-Strahlung in den Banden um die Wellenlängen 2700 nm und 4300 nm, wobei die Absorption in der Hauptbande um 4300 nm am stärksten ist.

Indem also die optische Dicke des Gasfilters so eingestellt ist, dass im Bereich der Absorptionsbande um 4300 nm Sättigungsabsorption stattfindet, steht nur noch die wesentlich geringere Absorption im Bereich der Absorptionsbande um 2700 nm für die Messung zur Verfügung. Für die Messung von Kohlendioxid kann daher die Messkammer länger gewählt werden, als dies bei einer das gesamte Absorptionsspektrum von Kohlendioxid beinhaltenden Messung möglich ist.

Beispielsweise aus der DE 10 2007 020 596 A1 sind NDIR-Zweistrahl-Gasanalysatoren bekannt, bei denen die von der Infrarot-Strahlungsquelle erzeugte Strahlung mittels eines Strahlteilers (sog. Hosenkammer) auf einen Messstrahlengang durch die Messkammer und einen Vergleichsstrahlengang durch die Vergleichskammer aufgeteilt wird. In diesem Fall kann in vorteilhafter Weise der Strahlteiler mit der in der hohen Konzentration im Messgas vorliegenden Gaskomponente gefüllt werden, um das Gasfilter zu bilden. Ein Gasfilter in Form eines separaten Bauteils ist dann nicht erforderlich. Grundsätzlich kann das Gasfilter an jeder Stelle im Strahlengang vor dem Detektor für die mit in der hohen Konzentration vorliegende Gaskomponente angeordnet sein.

Das Gasfilter bewirkt, wenn auch keine Sättigungsabsorption, so doch auch eine Vorabsorption der Infrarot-Strahlung in dem für die Messung genutzten Bereich der Absorptionsbande der in hoher Konzentration vorliegenden Gaskomponente, im Falle von Kohlendioxid also um 2700 nm. Um jede unnötige Intensitätsschwächung der Strahlung durch die Fenster der Detektoren zu vermeiden, kann der die in der hohen Konzentration im Messgas vorliegende Gaskomponente enthaltende Detektor in vorteilhafter Weise unmittelbar hinter der Messkammer und der Vergleichskammer und vor jedem weiteren Detektor angeordnet sein.

Wie bereits erwähnt, kann es sich bei der in der hohen Konzentration im Messgas vorliegenden Gaskomponente um Kohlendioxid handeln, wobei der Kohlendioxid enthaltende Detektor in vorteilhafter Weise mit Kohlendioxid in natürlicher Isotopenzusammensetzung gefüllt ist.

Bei der mindestens einen weiteren Gaskomponente kann es sich um Kohlenmonoxid und/oder Schwefeldioxid handeln. So sind gemäß Bundes-Immissionsschutzverordnung (BImSchV) bei der Kraftwerksüberwachung gleichzeitig die Konzentrationen von Kohlenmonoxid (30 ppm) und Kohlendioxid (15 Vol.-%) zu messen. Bei Seeschiffen ist es Schwefeldioxid (50 ppm) und ebenfalls Kohlendioxid (15 Vol.-%). Das Kohlendioxid enthaltende Gasfilter ist für die Infrarot-Strahlung in den Bereichen der Absorptionsbanden von Kohlenmonoxid und Schwefeldioxid durchlässig.

Analog zur erfindungsgemäßen Messung von Kohlendioxid können u. a. Stickstoffmonoxid (gesättigte Bande bei 5200-5500nm, für die Messung verwendete Bande bei 2700nm), Stickstoffdioxid (gesättigte Bande bei 6100-6300nm, für die Messung verwendete Bande bei 3400nm) und/oder Kohlenmonoxid (gesättigte Bande bei 4500-4800nm, für die Messung verwendete Bande bei 2300nm) zusammen mit weiteren Gaskomponenten gemessen werden.

Im Weiteren wird die Erfindung anhand von Ausführungsbeispielen und unter Bezugnahme auf die Figuren der Zeichnung erläutert; im Einzelnen zeigen:
- Fig. 1: ein Beispiel für den erfindungsgemäßen NDIR-Gasanalysator mit Gasfilter,
- Fig. 2: das Transmissionsspektrum des mit Kohlendioxid gefüllten Gasfilters,
- Fig. 3: die Abhängigkeit des Detektorsignals von der zu messenden Konzentration,
- Fig. 4: das Transmissionsspektrum des Gasfilters bei Füllung mit Stickstoffmonoxid,
- Fig. 5: das Transmissionsspektrum Gasfilters bei Füllung mit Stickstoffdioxid und
- Fig. 6: das Transmissionsspektrum Gasfilters bei Füllung mit Kohlenmonoxid.

Gleiche Bezugszeichen haben in den verschiedenen Figuren die gleiche Bedeutung. Die Darstellungen sind rein schematisch und repräsentieren keine Größenverhältnisse.

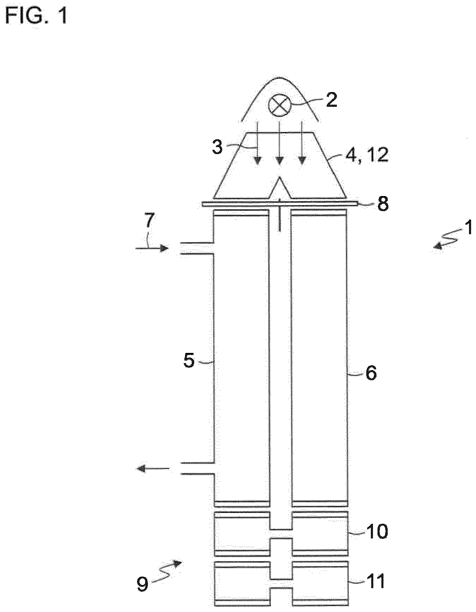

Fig. 1 zeigt einen NDIR-Gasanalysator 1 in Zweikanal-Ausführung mit einem Infrarot-Strahler 2, dessen Infrarot-Strahlung 3 mittels eines Strahlteilers 4 (sog. Hosenkammer) auf einen Messstrahlengang durch eine Messkammer 5 und einen Vergleichsstrahlengang durch eine Vergleichskammer 6 aufgeteilt wird. Die Messkammer 4 enthält ein Messgas 7 mit mindestens zwei Gaskomponenten, deren Konzentrationen zu bestimmen ist. Bei den Gaskomponenten handelt es sich um Kohlendioxid und mindestens eine weitere Gaskomponente, hier z. B. Kohlenmonoxid oder Schwefeldioxid. Die Vergleichskammer enthält ein Vergleichsgas, z. B. Stickstoff. Die Infrarot-Strahlung 3 wird mittels eines zwischen dem Strahlteiler 4 und der Mess- und Vergleichskammer 5, 6 angeordneten rotierenden Modulatorrads (Chopper, Zerhacker) 8 moduliert. Nach Durchstrahlen der Mess- und Vergleichskammer 5, 6 fällt die Messstrahlung 3 auf eine Detektoranordnung 9 mit einem ersten optopneumatischen Detektor 10 und einem nachgeordneten weiteren optopneumatischen Detektor 11. Der erste Detektor 10 ist mit Kohlendioxid in natürlicher Isotopenzusammensetzung und der zweite Detektor 11 mit Kohlenmonoxid bzw. Schwefeldioxid gefüllt. Der Strahlteiler 4 ist als Gasfilter 12 ausgebildet und enthält ebenfalls eine Kohlendioxid-Füllung. Die optische Dicke des Gasfilters 12 ist so gewählt, dass im Bereich der Absorptionsbande um 4300 nm eine Sättigungsabsorption vorliegt.

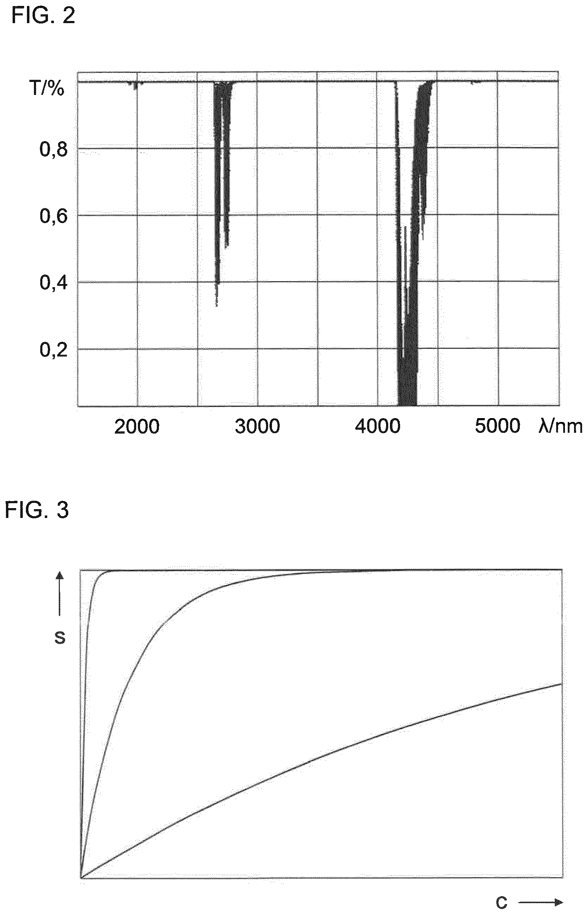

Fig. 2 zeigt das Transmissionsspektrum T(A) des Gasfilters 12. Das Kohlendioxid absorbiert die Infrarot-Strahlung in den Banden rund um die Wellenlängen 2700 nm und 4300 nm, wobei im Bereich der Absorptionsbande um 4300 nm Sättigungsabsorption stattfindet, während dies in der Bande um die Wellenlänge 2700 nm nicht der Fall ist.

Fig. 3 zeigt die Messkennlinie, also die Abhängigkeit des von dem optopneumatischen Detektor 10 für Kohlendioxid erzeugten Detektorsignals s von der zu messenden CO₂-Konzentration c für drei unterschiedlich starke Vorabsorptionen. Mit steigender Filterwirkung wird die Kennlinie linearer bzw. besser linearisierbar. Nicht dargestellt ist, dass sich das absolute Signal s dadurch verkleinert. Das kleinere Signal-Rausch-Verhältnis kann durch zeitliche Mittelung des Signals s kompensiert werden.

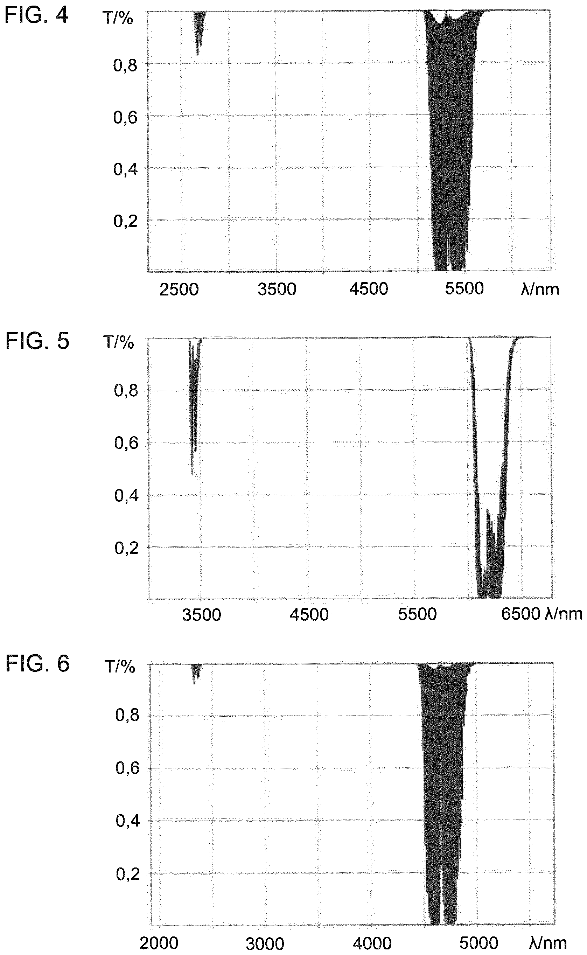

Fig. 4 zeigt das Transmissionsspektrum T(A) eines mit Stickstoffmonoxid gefüllten Gasfilters 12, wobei im Bereich der Absorptionsbande bei 5200-5500 nm Sättigungsabsorption stattfindet, während dies in der für die Messung verwendete Bande um 2700 nm nicht der Fall ist.

Fig. 5 zeigt das Transmissionsspektrum T(λ) eines mit Stickstoffdioxid gefüllten Gasfilters 12, wobei im Bereich der Absorptionsbande 6100-6300 nm Sättigungsabsorption stattfindet, während dies in der für die Messung verwendete Bande um 3400 nm nicht der Fall ist.

Fig. 6 zeigt das Transmissionsspektrum T(A) eines mit Kohlenmonoxid gefüllten Gasfilters 12, wobei im Bereich der Absorptionsbande 4500-4800 nm Sättigungsabsorption stattfindet, während dies in der für die Messung verwendete Bande um 2300 nm nicht der Fall ist.

## Patentansprüche

1. Nichtdispersiver Infrarot-Gasanalysator (1) zur Bestimmung von mindestens zwei Gaskomponenten in einem Messgas (7), wobei eine der Gaskomponenten im Vergleich zu den übrigen Gaskomponenten in hoher Konzentration vorliegt, mit einer Infrarot-Strahlungsquelle (2), einer Modulationseinrichtung (8), einer das Messgas (7) aufnehmenden Messkammer (5), einer Vergleichskammer (6) und mindestens zwei hintereinander liegenden optopneumatischen Detektoren (10, 11), von denen jeder jeweils eine der unterschiedlichen Gaskomponenten enthält, **dadurch gekennzeichnet, dass** zwischen der Infrarot-Strahlungsquelle (2) und den Detektoren (10, 11) ein Gasfilter (12) angeordnet ist, das die in der hohen Konzentration im Messgas (7) vorliegende Gaskomponente enthält und eine optische Dicke aufweist, durch die im Bereich einer Absorptionsbande der betreffenden Gaskomponente Sättigungsabsorption erreicht wird und gleichzeitig in mindestens einer anderen Absorptionsbande keine Sättigungsabsorption vorhanden ist.

2. Nichtdispersiver Infrarot-Gasanalysator (1) nach Anspruch 1, **dadurch gekennzeichnet, dass** das Gasfilter (12) aus einem mit der in der hohen Konzentration im Messgas (7) vorliegenden Gaskomponente gefüllten Strahlteiler (4) besteht, der die Infrarot-Strahlung (3) auf die Messkammer (5) und Vergleichskammer (6) aufteilt.

3. Nichtdispersiver Infrarot-Gasanalysator (1) nach Anspruch 1 oder 2, **dadurch gekennzeichnet, dass** der die in der hohen Konzentration im Messgas (7) vorliegende Gaskomponente enthaltende Detektor (10) unmittelbar hinter der Messkammer (5) und der Vergleichskammer (6) und vor jedem weiteren Detektor (11) angeordnet ist.

4. Nichtdispersiver Infrarot-Gasanalysator (1) nach einem der vorangehenden Ansprüche, **dadurch gekennzeichnet, dass** es sich bei der in der hohen Konzentration im Messgas (7) vorliegenden Gaskomponente um Kohlendioxid handelt, dass der Kohlendioxid enthaltende Detektor (10) mit Kohlendioxid in natürlieher Isotopenzusammensetzung gefüllt ist und dass die optische Dicke des Gasfilters (12) so gewählt ist, dass die Sättigungsabsorption im Bereich der Absorptionsbande um 4300 nm eintritt.

5. Nichtdispersiver Infrarot-Gasanalysator (1) nach Anspruch 4, **dadurch gekennzeichnet, dass** es sich bei der mindestens einen weiteren Gaskomponente um Kohlenmonoxid und/ oder Schwefeldioxid handelt.

6. Nichtdispersiver Infrarot-Gasanalysator (1) nach einem der vorangehenden Ansprüche, **dadurch gekennzeichnet, dass** es sich bei der in der hohen Konzentration im Messgas (7) vorliegenden Gaskomponente um Stickstoffmonoxid handelt und dass die optische Dicke des Gasfilters (12) so gewählt ist, dass die Sättigungsabsorption im Bereich der Absorptionsbande bei 5200-5500 nm eintritt.

7. Nichtdispersiver Infrarot-Gasanalysator (1) nach einem der vorangehenden Ansprüche, **dadurch gekennzeichnet, dass** es sich bei der in der hohen Konzentration im Messgas (7) vorliegenden Gaskomponente um Stickstoffdioxid handelt und dass die optische Dicke des Gasfilters (12) so gewählt ist, dass die Sättigungsabsorption im Bereich der Absorptionsbande bei 6100-6300 nm eintritt.

8. Nichtdispersiver Infrarot-Gasanalysator (1) nach einem der vorangehenden Ansprüche, **dadurch gekennzeichnet, dass** es sich bei der in der hohen Konzentration im Messgas (7) vorliegenden Gaskomponente um Kohlenmonoxid handelt und dass die optische Dicke des Gasfilters (12) so gewählt ist, dass die Sättigungsabsorption im Bereich der Absorptionsbande bei 4500-4800 nm eintritt.
